# FASCICULE DE BREVET EUROPEEN

(11) **EP 0 414 615 B1**
(45) Date de publication et mention de la délivrance du brevet: **18.11.1993**
(21) Numéro de dépôt: 90402350.4
(22) Date de dépôt: 23.08.1990
(51) Int. Cl.: B29C 33/38, B29C 33/30, B29C 33/04

(54) **Moule et son procédé de fabrication pour l'obtention de pièces moulées**
Schalung und ihr Herstellungsverfahren zum Erhalten von geformten Gegenständen
Mould and its method of manufacture for producing moulded articles

(30) Priorité: 25.08.1989 FR 8911272
(43) Date de publication de la demande: 27.02.1991
(73) Titulaire: ECIA - EQUIPEMENTS ET COMPOSANTS POUR L'INDUSTRIE AUTOMOBILE, F-25400 Audincourt (FR)
(72) Inventeur: Bes, Jean-Claude, F-25230 Seloncourt (FR)
(74) Mandataire: Mestre, Jean (FR)

(56) Documents cités:
- EP-A- 0 314 160
- DE-A- 3 538 581
- FR-A- 2 608 963
- FR-A- 2 612 431
- US-A- 2 679 172
- PATENT ABSTRACTS OF JAPAN, vol. 10, no. 134 (M-479)[2191], 17 mai 1986;& JP-A-60 259 420 (FANUC) 21-12-1985

## Description

L'invention concerne les techniques du moulage de pièces et est relative, plus particulièrement, à un moule et à son procédé de fabrication pour l'obtention de pièces moulées.

L'invention concerne une technique de réalisation rapide et économique d'un outillage tel qu'un moule destiné à produire notamment des pièces en cours de définition et/ou de mise au point.

La technique selon l'invention permet de faire les nombreuses modifications inhérentes à la mise au point des pièces définitives à obtenir par moulage et ceci dans des conditions de coût et de délai sans commune mesure avec les procédures traditionnelles.

Comme il est connu, dans de nombreux secteurs industriels, on utilise des pièces moulées faites à partir de substances métalliques ou synthétiques telles que des matières dites "plastiques". C'est, par exemple, le cas dans l'industrie automobile. Les constructeurs cherchent à réduire les délais de lancement des nouveaux produits pour des raisons économiques et, de même, ils s'attachent aussi à améliorer la qualité et la fiabilité des produits commercialisés, les clients acceptant de moins en moins les mises au point tardives des produits mis sur le marché. Comme on peut l'imaginer, ces différents objectifs conduisent les fabricants à mettre en oeuvre des processus adaptés de manière à pouvoir satisfaire à la demande tant en délai, qualité et coût.

Pour lancer des vérifications et des essais représentatifs d'une production, il est indispensable de fabriquer en vrai grandeur des pièces brutes faites dans la matière définitive et avec des techniques de production identiques à celles qui seront utilisées pour les fabrications en série. En particulier, lorsqu'on utilise des pièces obtenues par moulage, il faut se servir d'outillages tels des moules. Actuellement, la plupart de ces moules sont faits suivant des processus traditionnels d'usinage; tout au plus les moules sont-ils quelque peu simplifiés étant donné qu'ils devront subir de nombreuses modifications inhérentes à la définition et à la mise au point du produit et que la durée de vie de tels moules sera limitée, en général, à cette période de mise au point du produit final à produire ultérieurement en série.

On imagine facilement que ce type de moule reste très coûteux bien que d'un délai de fabrication quelque peu réduit par rapport à la durée nécessaire pour produire les moules de série mais qui demeure toutefois excessif compte tenu du nombre et de la durée des essais à conduire entre chaque modification. De plus, ces modifications ne sont pas toujours réalisables sans une remise en cause profonde du moule initial.

En outre, les matériaux utilisés même pour ce qui pourrait être considérée comme la partie commune entre le moule prototype et le moule définitif de série sont, dans la plupart des cas, irrécupérables. Ce type de difficulté est d'autant plus gênant que les moules sont en nombre relativement important dans le cas de l'industrie automobile. En particulier, lorsqu'on utilise des pièces en substances synthétiques comme c'est le cas par exemple pour les tableaux de bord, les boucliers, les façades avant, les calandres, ...etc. Toutefois, il est classique pour des pièces de petites dimensions obtenues par moulage par injection de substances synthétiques, d'utiliser des moules simplifiées produits à partir d'un modèle surmoulé fait en un matériau récupérable à base de zinc. Pour ce type de solution. les délais de fabrication d'un tel moule peuvent être considérablement abrégés et les coûts relativement abaissés du fait de la possibilité de récupération du matériau mais les modifications importantes sont fréquemment irréalisables et il faut alors obligatoirement recréer un nouveau moule.

Des solutions sont exposées dans les documents FR-A-2 608 963 qui énonce les caractéristiques des préambules des revendications indépendantes et US-A-2 679 172.

Le but principal de l'invention vise à réduire les délais de fabrication de nouveaux moules en particulier pour diminuer le délai de lancement de nouveaux produits ou de la mise au goût du jour de leurs silhouettes, tout en recherchant l'amélioration des pièces pour permettre un démarrage précoce des essais en vrai grandeur des pièces sur un produit aussi proche que possible de sa version finale ou mieux dans sa version ultime.

L'invention a pour objets un moule et son procédé de fabrication pour la production de pièces par exemple en substances synthétiques notamment moulées par injection.

Le procédé selon l'invention pour la fabrication d'un moule avec une chambre portant l'empreinte de la pièce à obtenir est caractérisé notamment par les particularités distinctives exposées dans la revendication principale 1.

L'invention a pour objet un moule avec une chambre portant l'empreinte de la pièce à obtenir, fabriqué notamment selon le procédé indiqué précédemment, et qui est caractérisé notamment par les particularités distinctives exposees dans la revendication principale 7.

D'autres caractéristiques de l'invention ressortiront de la lecture de la description et des revendications qui suivent, et de l'examen du dessin annexé, donné seulement à titre d'exemple, où :
- la Figure 1 est une vue perspective schématique partielle éclatée d'un mode de réalisation d'un moule selon l'invention;
- la Figure 2 est une coupe transversale schématique d'un mode de réalisation d'un moule selon l'invention assemblé;
- la Figure 3 est une coupe longitudinale schématique du mode de réalisation dessiné sur la Figure 2;
- la Figure 4 est une vue de dessus de la partie inférieure du mode de réalisation illustré sur la Figure 3;
- la Figure 5 est une vue de dessus schématique d'une plaque d'un moule selon l'invention;
- la Figure 6 est une section selon la ligne 6-6 de la Figure 5;
- la Figure 7 est une vue de détail partielle schématique montrant la manière dont les éléments du circuit de refroidissement sont réunis;
- et la Figure 8 est une section partielle adjacentes correspondant à une même courbe de niveau soit mises en coïncidence afin que l'ensemble des cavités forme la chambre avec l'empreinte de la pièce à obtenir et de manière que les trous soient alignés les uns avec les autres et avec le canal et un dispositif de blocage coopérant, d'une part, avec d'autres de ces parois de ces logements et, d'autre part, avec d'autres de ces tranches de ces plaques pour immobiliser ces plaques empilées en registre dans chacun des logements.

D'autres caractéristiques de l'invention ressortiront de la lecture de la description et des revendications qui suivent, et de l'examen du dessin annexé, donné seulement à titre d'exemple, où :

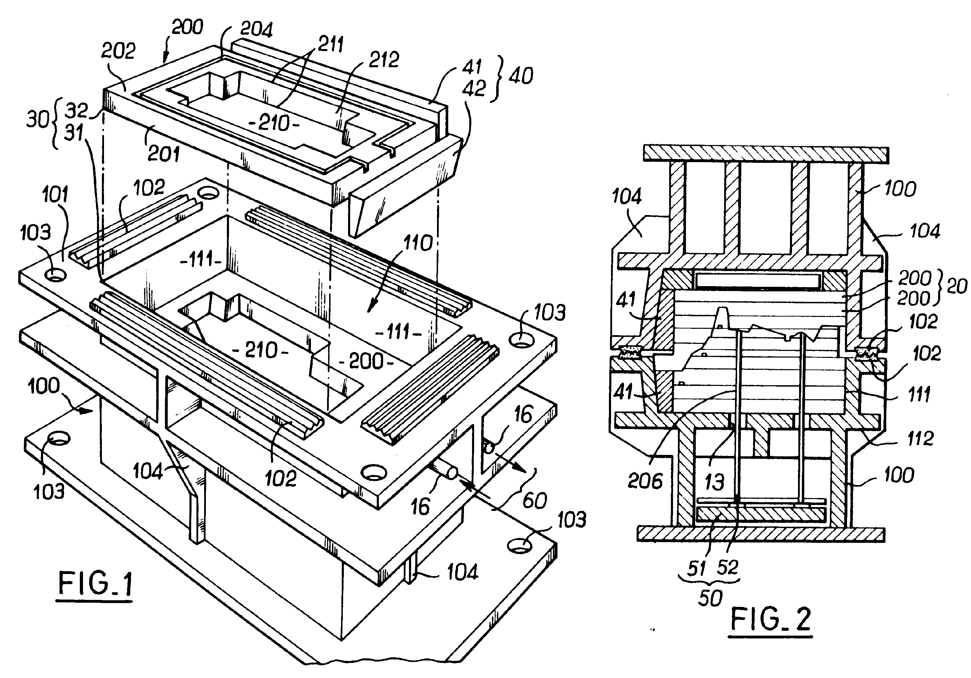

- la Figure 1 est une vue perspective schématique partielle éclatée d'un mode de réalisation d'un moule selon l'invention;
- la Figure 2 est une coupe transversale schématique d'un mode de réalisation d'un moule selon l'invention assemblé;

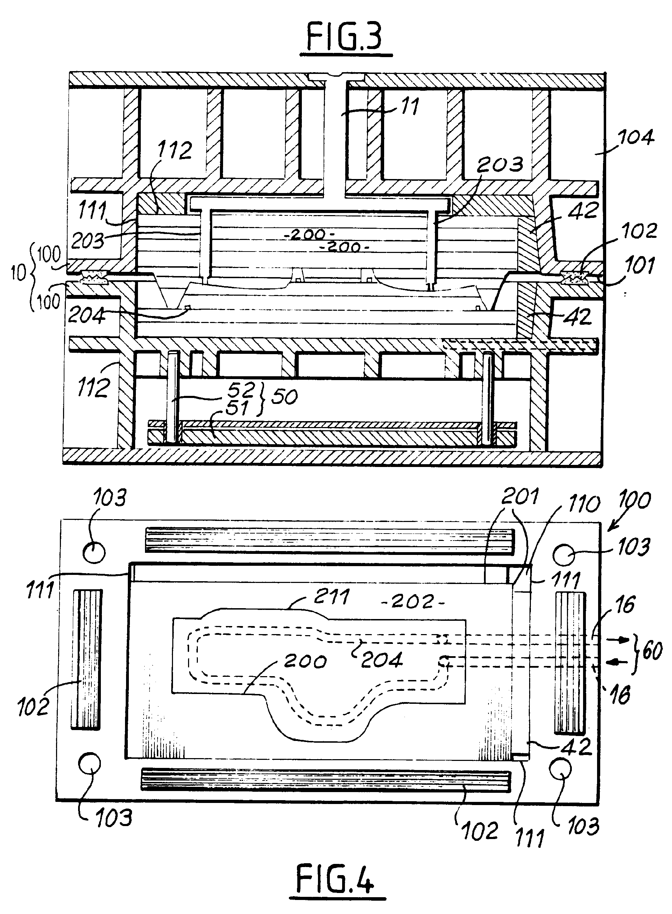

- la Figure 3 est une coupe longitudinale schématique du mode de réalisation dessiné sur la Figure 2;
- la Figure 4 est une vue de dessus de la partie inférieure du mode de réalisation illustré sur la Figure 3;

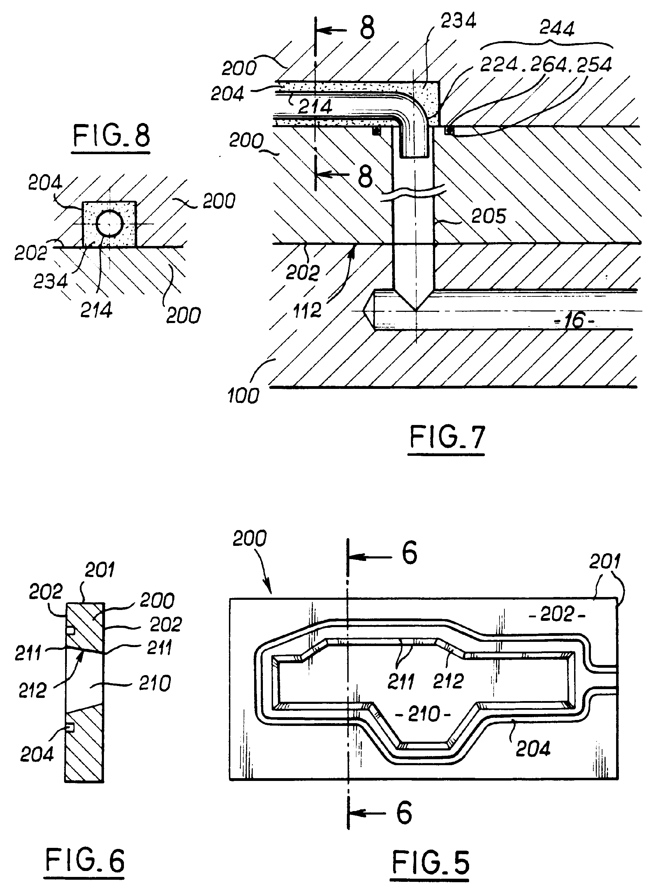

- la Figure 5 est une vue de dessus schématique d'une plaque d'un moule selon l'invention;
- la Figure 6 est une section selon la ligne 6-6 de la Figure 5;
- la Figure 7 est une vue de détail partielle schématique montrant la manière dont les éléments du circuit de refroidissement sont réunis;
- et la Figure 8 est une section partielle selon la ligne 8-8 de la Figure 7.

Pour la pratique de la technique selon l'invention, on part d'un modèle de la pièce à obtenir dont on trace des courbes de niveau à intervalles constants ou non. La manière de procéder pour relever et tracer des courbes de niveau ne fait pas partie de la présente invention. Une fois ces courbes de niveau déterminées, on peut relever les coordonnées de leurs contours. Des techniques connues permettent de déterminer ces courbes de niveau et de relever automatiquement les coordonnées de chacun de leur point avec la précision recherchée. Ces coordonnées, éventuellement après digitalisation, peuvent être par exemple stockées dans des mémoires de calculateurs ou microprocesseurs en vue de leur exploitation ultérieure comme il est courant actuellement.

Cette phase préliminaire étant achevée, on peut construire un moule selon l'invention.

Pour fabriquer un moule avec un chambre portant l'empreinte de pièces à obtenir, on procède comme il est indiqué par la suite.

On établit des courbes de niveau de la pièce à obtenir, on relève les coordonnées des contours de ces courbes de niveau, on découpe dans des plaques dont l'épaisseur déterminée propre à chacune d'elles correspond à l'intervalle, constant ou non, de deux courbes de niveau successives, des cavités délimitées sur chacune des faces opposées d'une plaque par une arête identique au contour correspondant et par un flanc reliant les arêtes d'une même plaque, on met en registre les plaques ainsi obtenues de manière que les arêtes de deux plaques contiguës adjacentes correspondent à une même courbe de niveau et de manière que ces deux arêtes soient en coïncidence afin que toutes ces cavités délimitent ensemble la chambre avec l'empreinte de la pièce, on place ces plaques ainsi empilées en registre dans un logement d'une carcasse, puis on les bloque empilées en registre dans ce logement.

On obtient de la sorte une ébauche de moule car la surface intérieure de la cavité de moulage présente une structure étagée, en gradins ou en terrasses. Pour affiner la qualité de cette surface et la parfaire, on usine alors les flancs des plaques empilées en registre pour leur donner le profil exact de l'empreinte de la pièce à mouler. Cet usinage est fait par toute technique classique traditionnelle par exemple par fraisage, meulage, rectification, électroérosion,.... Les machines utilisées pour donner à la surface de la chambre sa configuration finale au profil exact sont par exemple des machines-outils à commande numérique qui exploitent les coordonnées, éventuellement préalablement numérisées, stockées dans des mémoires appropriées.

S'il y a lieu, pour le cas où la technique de moulage utilisée nécessite un refroidissement du moule et/ou de la pièce à obtenir et cela éventuellement avec des différentiations locales, on ménage sur l'une au moins des faces de l'une au moins de ces plaques une rainure entourant au moins partiellement l'arête du contour correspondant pour être utilisée en conjonction avec un circuit de refroidissement.

De préférence, on met en registre ces plaques à l'aide d'un trièdre trirectangle défini par des surfaces des plaques et des surfaces du logement de la carcasse.

De préférence, on bloque les plaques empilées en registre dans le logement de la carcasse par la mise en oeuvre d'un coincement.

On se reportera maintenant aux figures du dessin.

Comme on peut l'observer, un moule selon l'invention comprend, entre autres, une carcasse 10 faite de deux coquilles 100 creuses présentant chacune un logement 110, un corps de moulage 20 fait de plaques 200 interchangeables, des moyens de mise en registre 30 complémentaires portés par les logements et les plaques, et un dispositif de blocage 40 coopérant avec ces logements et ces plaques.

S'il y a lieu, ce moule est équipé d'un éjecteur 50 et associé à un circuit de refroidissement 60.

Pour la commodité de l'exposé, on décrira successivement chacun des constituants d'un moule selon l'invention. On utilise toujours un même numéro de référence pour identifier un élément homologue quel que soit le mode de réalisation.

La carcasse 10 est faite de deux coquilles 100 creuses. Chacune de ces coquilles comprend un plan de jonction 101, un agencement de repérage mutuel 102, des moyens de montage 103 sur une machine de moulage et, s'il y a lieu, des nervures de rigidification et de renforcement 104.

L'agencement de repérage mutuel 102 est constitué, par exemple comme illustré, de stries à section triangulaire complémentaires disposées dans le plan de jonction 101 sur chacune des coquilles. Ces stries, cannelures ou analogues s'engagent les unes dans les autres à la fermeture du moule lorsque les deux coquilles sont appliquées l'une contre l'autre en vue de l'introduction de la substance à mouler.

Ces moyens de montage 103 sont par exemple des alésages, comme dessiné, pour le passage de boulons ou tirants non représentés.

A l'intérieur de chacune des coquilles 100 creuses est ménagé un logement 110 délimité par des parois latérales 111 et un fond 112 situé à l'oppose du plan de jonction 101.

La carcasse 10 est aussi munie d'au moins un canal 11 pour l'introduction de la substance à mouler. Comme on le voit, de préférence, ces canaux débouchent à l'extérieur en traversant le fond 112 du logement.

S'il y a lieu, la carcasse 10 est aussi munie de passages 13 pour un éjecteur 50 et de conduites 16 pour le circuit de refroidissement 60. On reviendra ultérieurement sur cet éjecteur et ce circuit de refroidissement.

Le corps de moulage 20 est fait de plaques 200. Chacune de ces plaques présente une tranche 201 et des faces opposées 202. L'épaisseur déterminée de la tranche d'une plaque peut être la même pour chacune des plaques ou certaines d'entre elles ou bien chacune des plaques peut avoir une épaisseur différente particulière.

Comme on le voit, la plupart de ces plaques sont transpercées par une cavité 210 qui débouche sur les deux faces opposées 202. L ensemble de ces cavités, lorsque les plaques sont empilées et mises en registre, délimitent la chambre de moulage dont le profil correspond à celui de l'empreinte de la pièce à obtenir. Comme on peut l'observer, chacune de ces cavités 210 présente sur chacune des faces 202 une arête 211 dont le contour correspond à celui d'une courbe de niveau. Ces arêtes 211 situées sur deux faces opposées sont réunies par un flanc 212. C'est ce flanc qui est usiné ultérieurement s'il y a lieu.

Ces plaques, au moins certaines d'entre elles, sont transpercées de trous 203. Ces trous, qui sont destinés à s'aligner, débouchent dans les canaux d'introduction 11 de la carcasse de manière à pouvoir alimenter la chambre en substances à mouler pour obtenir la pièce. Si nécessaire, ces trous 203 sont chemisés par des "busettes".

S'il y a lieu, certaines de ces plaques, sur l'une au moins de leurs faces 202, sont creusées d'une rainure 204 entourant au moins partiellement une des arêtes 211. Ces rainures sont utilisées pour le circuit refroidissement. De préférence, on scelle dans cette rainure 204 un tuyau 214 à l'aide d'une résine ou d'un ciment de blocage 234. Pour assurer la continuité du circuit de refroidissement, on utilise un raccord 244 entre plaques contiguës adjacentes ou entre plaque et fond. Le raccord 244 comprend par exemple un embout 224 coudé du tuyau 214 et une gorge 254 creusée dans l'une des faces 202 entourant un orifice 205 transperçant les plaques. Dans la gorge 254 est placé un joint 264. Ceci est illustré en détail sur les Figures 7 et 8. Pour les plaques qui sont seulement transpercées d'orifices 205, le contact face contre face ou face contre fond est, généralement, suffisant pour assurer l'étanchéité du circuit de refroidissement. Si ce n'est pas le cas, on peut obtenir cette étanchéité par exemple à l'aide de gorge et joint appropriés convenables.

Ces plaques, de préférence de configuration parallélépipédique rectangle, sont destinées à être empilées face contre face dans les logements. Cet empilage peut se faire à plat sur le fond ou perpendiculairement à ce dernier, sur chant.

Les moyens de mise en registre 30 sont portés pour partie par les logements et pour partie par les plaques. Ces moyens de mise en registre comprennent, par exemple, un trièdre 31 trirectangle fait par deux parois latérales 111 consécutives et le fond 112 du logement 110 ou les faces 202 des plaques 200 qui y sont successivement empilées. Ils comprennent aussi un trièdre complémentaire 32 fait par deux tranches 201 consécutives et les faces 202 opposées des plaques 200 parallélépipédiques en particulier celles dirigées vers le fond.

Le dispositif de blocage 40, coopérant avec ces logements et ces plaques, est constitué par les parois latérales 111 qui sont opposées à celles qui participent à la formation du trièdre 31 et ces faces latérales opposées sont inclinées par rapport à celle du trièdre. Ce dispositif de blocage comprend des coins 41 et 42 qui sont insérés entre ces faces latérales 111 inclinées et les tranches 201 des plaques situées en regard de celles-ci.

L'éjecteur 50 comprend un poussoir 51 et des tiges 52 qui traversent les passages 13 de la carcasse et des découpes 206 ménagées dans les plaques 200 comme cela apparaît à l'examen du dessin. Cet éjecteur est destiné à démouler et extraire la pièce produite.

La carcasse 10 est faite en tout matériau convenable résistant qui permet son montage sur une machine de moulage telle que par exemple une presse a injection. Cette carcasse assure la robustesse, la solidité mécanique ainsi que la stabilité dimentionnelle du moule.

Pour les plaques, on utilise par exemple un alliage d'aluminium dénommé "FORTAL" et mis dans le commerce par la Société PECHINEY.

Le tuyau du circuit de refroidissement est, par exemple fait d'un tube de cuivre et comme ciment de blocage on utilise une résine chargée en aluminium. En choisissant convenablement les matériaux de ces tuyaux et ciments et en adaptant la position et la section de ces rainures, tuyaux et ciments il est aisé de moduler à volonté le gradient de la température du moule.

De ce qui précède, on voit immédiatement que grâce à la technique selon l'invention qui met en particulier en oeuvre des plaques empilées mises en registre après avoir été préalablement découpées et qui incorporent s'il y a lieu une partie d'un circuit de refroidissement qui permet de réguler avec précision la température locale du moule, il est possible de faire des retouches locales par approximations successives rapides et relativement peu onéreuses sans qu'il soit nécessaire de reconstruire à chaque fois en totalité un moule à l'occasion de chaque modification du prototype qui le conduit vers la version finale de la pièce à obtenir. En effet, seuls un démontage du moule et une retouche ou un échange des seules plaques concernées par cette modification puis un remontage sont nécessaires.

Il est facile d'imaginer les gains en coût et rapidité qui résultent de l'invention du fait de la souplesse qu'elle permet.

## Revendications

1. Procédé pour la fabrication d'un moule pour moulage par injection avec une chambre portant l'empreinte de la pièce à obtenir, selon lequel
- on établit des courbes de niveau de la pièce à obtenir,
- on relève les coordonnées des contours de ces courbes de niveau,
- on découpe dans des plaques (200) dont l'épaisseur déterminé propre à chacune d'elles correspond à l'intervalle de deux courbes de niveau successives, des cavités (210) délimitées sur chacune des faces (202) opposées d'une plaque (200) par une arête (211) identique au contour correspondant et par un flanc (212) reliant les arêtes (211) d'une même plaque (200),
- on met en registre ces plaques (200) de manière que les arêtes (211) de deux plaques contiguës adjacentes correspondent à une même courbe de niveau et de manière que ces cavités (210) délimitent ensemble la chambre avec l'empreinte de la pièce,
- et caractérisé en ce qu'on place les plaques (200) ainsi empilées en registre dans un logement (110) d'une carcasse (10),
- on bloque les plaques (200) empilées en registre dans le logement (110) de la carcasse (10), et
- on ménage sur l'une au moins des faces (202) de l'une au moins de ces plaques (200) une rainure (204) entourant au moins partiellement l'arête (211) du contour correspondant pour un circuit de refroidissement (60).

2. Procédé pour la fabrication d'un moule selon la revendication 1, caractérisé en ce qu'on utilise des plaques (200) de même épaisseur.

3. Procédé pour la fabrication d'un moule selon la revendication 1, caractérisé en ce qu'on utilise des plaques (200) d'épaisseurs propres différentes pour partie.

4. Procédé pour la fabrication d'un moule selon l'une quelconque des revendications 1 à 3, caractérisé en ce qu'on usine les flancs (212) des plaques (200) empilées en registre pour leur donner le profil exact de l'empreinte de la pièce à obtenir.

5. Procédé pour la fabrication d'un moule selon l'une quelconque des revendications 1 à 4, caractérisé en ce qu'on met en registre ces plaques (200) à l'aide d'un trièdre (31, 32) trirectangle défini par des surfaces des plaques et du logement (110) de la carcasse (10).

6. Procédé pour la fabrication d'un moule selon l'une quelconque des revendications 1 à 5, caractérisé en ce qu'on bloque les plaques (200) empilées en registre dans le logement (110) de la carcasse (10) par coincement.

7. Moule pour moulage par injection avec une chambre portant l'empreinte de la pièce à obtenir, fabriqué notamment selon l'une quelconque des revendications précédentes, fait :
- d'une carcasse (10) constituée de deux coquilles (100) creuses qui possèdent, chacune, un logement (110) délimité par des parois latérales (111) et un fond (112), un plan de jonction (101) à l'opposé de ce fond **(**112), un agencement de repérage mutuel (102) des coquilles (100) placé dans ce plan de jonction (101) et des moyens de montage (103) pour leur pose sur une machine de moulage, et équipée d'au moins un canal (11) pour l'introduction d'une substance à mouler dans la chambre de moulage;
- d'un corps de moulage (20) constitué de plaques (200) qui présentent des tranches (201) chacune d'épaisseur déterminée propre et des faces (202) opposées et qui sont pour au moins certaines d'entre elles transpercées d'une cavité (210) qui est délimitée sur chacune de ces faces (202) par une arête (211) dont le contour est identique au contour d'une courbe de niveau de la pièce a obtenir et par un flanc (212) joignant les arêtes (211) opposées d'une même plaque (200), et qui sont transpercées de trous (203) pour l'alimentation en substance à mouler, ces plaques (200) étant destinées à être empilées face contre face dans ces logements (110);
caractérisé en ce qu'il comprend:
- des moyens de mise en registre (30) complémentaires portés les uns par des parois (111) et fonds (112) de ces logements (110) et les autres par des tranches (201) et faces (202) de ces plaques (200) de manière que les arêtes (211) de ces plaques contiguës adjacentes correspondant à une même courbe de niveau soient mises en coincidence afin que l'ensemble des cavités (210) forment la chambre avec l'empreinte de la pièce à obtenir et de manière que les trous (203) soient alignés les uns avec les autres et avec le canal (11);
et un dispositif de blocage (40) coopérant, d'une part, avec d'autres de ces parois (111) de ces logements (110) et, d'autre part, avec d'autres de ces tranches (201) de ces plaques (200) empilées en registre dans chacun des logements (110);

8. Moule selon la revendication 7, caractérisé en ce que ces plaques (200) ont des épaisseurs égales.

9. Moule selon la revendication 7, caractérisé en ce que ces plaques (200) ont pour partie au moins des épaisseurs différentes.

10. Moule selon l'une quelconque des revendications 7 à 9, caractérisé en ce que les flancs (212) sont usinés une fois les plaques (200) empilées et mises en registre, pour leur donner le profil exact de l'empreinte de la pièce à obtenir.

11. Moule selon l'une quelconque des revendications 7 à 10 caractérisé en ce que la carcasse (10) est munie de conduites (16) pour un circuit de refroidissement (60), en ce qu'au moins l'une de ces plaques (200) est creusée sur l'une au moins de ses faces (202) d'une rainure (204) entourant au moins partiellement l'arête (211) du contour correspondant, et s'il y a lieu la ou les plaques (200) intercalaires entre le fond (112) et la rainure (204) sont transpercées d'orifices (205) et en ce que les conduites (16), orifices (205) et rainures (204) débouchent les uns dans les autres lorsque les plaques (200) sont empilées en registre et bloquées dans les logements (110).

12. Moule selon l'une quelconque des revendications 7 à 11, caractérisé en ce que la carcasse (10) est percée de passages (13) pour un éjecteur (50), en ce que ces plaques sont transpercées de découpes (206) pour la traversée d'une partie de l'éjecteur et en ce que ces passages (13) et orifices (205) sont alignés les uns avec les autres lorsque les plaques (200) sont empilées en registre et bloquées dans les logements (110).

13. Moule selon l'une quelconque des revendications 7 à 9, caractérisé en ce que ces moyens de mise en registre (30) complémentaires sont constitués, d'une part, d'un trièdre (31) faits de deux parois latérales (111) consécutives et du fond (112) d'un logement (110) ou de la face (202) apparente d'une plaque (200) qui y repose et, d'autre part, d'un autre trièdre (32) faits des tranches (201) consécutives des plaques (200) empilées et des faces (202) opposées des plaques (200) en particulier par celle qui est dirigée vers le fond (112).

14. Moule selon la revendication 13, caractérisé en ce que les plaques (200) sont des parallélépipèdes rectangles, en ce que les parois latérales (111) qui sont opposées à celles (111) qui participent a la formation du triédre (31) sont inclinées par rapport à elles et en ce que le dispositif de blocage (40) est constitué de coins (41, 42) insérés entre ces faces latérales inclinées et les tranches situées en regard de celles-ci.

15. Moule selon l'une quelconque des revendications 11 à 14, caractérisé en ce que la liaison entre orifice (205) et rainure (204) est assurée par un raccord (244) étanche constitué d'un embout (224) saillant scellé dans la rainure (204) et destiné à être engagé dans l'orifice (205), d'une gorge (254) entourant l'orifice (205) et d'un joint (264) logé dans la gorge (254).

## Patentansprüche

1. Verfahren zur Herstellung einer Schalung für Formung mit Einspritzung mit einer Kammer, die den Abdruck des zu erhaltenden Gegenstandes trägt, gemäß dem
- man Niveaulinien des zu erhaltenden Gegenstandes aufstellt,
- man die Koordinaten der Konturen dieser Niveaulinien eremittelt,
- man aus den Platten (200), deren jeweils für jede von ihnen festgelegte Dicke dem Intervall der zwei aufeinanderfolgenden Niveaulinien entspricht, Vertiefungen (210) ausschneidet, die auf jeder der entgegengesetzten Seiten (202) einer Platte (200) durch eine Kante (211) begrenzt werden, die identisch mit der entsprechenden Kontur ist, und durch eine Seitenfläche (212), die die Kanten einer gleichen Platte (200) verbindet,
- man diese Platten (200) derart in Register legt, daß die Kanten (211) der beiden angrenzenden aneinanderstoßenden Platten einer gleichen Niveaulinie entsprechen, und derart, daß die Vertiefungen (210) gemeinsam die Kammer mit dem Abdruck des Gegenstandes begrenzen,
- und dadurch gekennzeichnet, daß man die so im Register aufgeschichteten Platten in eine Lagerung (11) einer Karkasse (10) setzt,
- man die im Register aufgeschichteten Platten (200) in der Lagerung (110) der Karkasse (10) blockiert und
- man auf zumindest einer der Seiten (202) von zumindest einer dieser Platten (220) eine Rille (204) anordnet, die teilweise die Kante (211) der entsprechenden Kontur für einen Kühlkreislauf (60) einfaßt.

2. Verfahren zur Herstellung einer Schalung gemäß Anspruch 1, dadurch gekennzeichnet, daß man Platten (200) der gleichen Dicke benutzt.

3. Verfahren zur Herstellung einer Schalung gemäß Anspruch 1, dadurch gekennzeichnet, daß man Platten mit eigenen zum Teil unterschiedlichen Dicken benutzt.

4. Verfahren zur Herstellung einer Schalung gemäß irgendeinem der Ansprüche 1 bis 3, dadurch gekennzeichnet, daß man die Seitenflächen (212) der im Register aufgeschichteten Platten (200) benutzt, um ihnen das exakte Profil des Abdrucks des zu erhaltenden Gegenstandes zu geben.

5. Verfahren zur Herstellung einer Schalung gemäß irgendeinem der Ansprüche 1 bis 4, dadurch gekennzeichnet, daß man diese Platten (200) mit Hilfe eines dreirechteckigen Trieders (31, 32), das von den Flächen der Platten und der Lagerung (110) der Karkasse (10) bestimmt ist, in Register legt.

6. Verfahren zur Herstellung einer Schalung gemäß irgendeinem der Ansprüche 1 bis 5, dadurch gekennzeichnet, daß man die im Register aufgeschichteten Platten (200) in der Lagerung (110) der Karkasse (10) durch Klemmung blockiert.

7. Schalung für die Pormung durch Einspriztzung mit einer Kammer, die den Absruck des zu erhaltenden Gegenstandes trägt, und die insbesondere gemäß irgendeinem der vorherigen Ansprüche hergestellt wurde, und die gebildet ist aus:
- einer Karkasse (10), die aus zwei hohlen Schalen (100) besteht, die jeweils eine Lagerung (110) besitzen, die von Seienwänden (111) und einem Boden (112) begrenzt wird, eine Verbindungsebene (101), die diesem Boden (112) entgegengesetzt ist, eine Einrichtung der gegenseitigen Ortung (102) der Schalen (100), die in dieser Verbindungsebene (101) gelagert ist, und Montagemittel (103) für ihr Anbringen auf einer Formungsmaschine, und wobei sie mit zumindest einem Kanal (11) zur Einfuhr eines zu formenden Stoffes in die Formungskammer ausgestattet ist;
- einem Formkörper (20), der aus Platten (200) gebildet ist, die Scheiben (201) von einer jeweils eingens festgelegten Dicke und entgegengesetzte Seiten (202) aufweisen, und die zumindest für einige von ihnen von einer Vertiefung (210) durchbohrt sind, die auf jeder dieser Seiten (202) von einer Kante (211) begrenzt ist, deren Kontur identisch zu der Kontur einer Niveaulinie des zu erhaltenden Gegenstandes ist, und von einer Seitenfläche (212), die die entgegengesetzten Kanten (211) einer gleichen Platte (200) verbindet, und die von Löchern (203) durchbohrt sind für die Zufuhr des zu formenden Stoffes, wobei diese Platten (200) dazu bestimmt sind, Seite an Seite in diesen Lagerungen (110) aufgeschichtet zu werden;
dadurch gekennzeichnet, daß sie aufweist:
- ergänzende Mittel zum Legen in Register (30), wovon die einen von den Wänden (111) und Böden (112) dieser Lagerungen (110) und die anderen von Scheiben (201) und Seiten (202) dieser. Platten derart getragen werden, daß die Kanten (211) dieser angrenzenden aneinanderstoßenden Platten, die einer gleichen Niveaulinie entsprechen in Übereinstimmung gebracht werden, damit die Gesamtheit der Vertiefungen (210) die Kammer mit dem Abdruck des zu erhaltenden Gegenstandes bilden, und derart, daß die Löcher (203) miteinander und mit dem Kanal (11) in einer Reihe liegen;
und eine Blockierungsvorrichtung (40), die einerseits mit anderen dieser Wände (111) dieser Lagerungen (110) und andererseits mit anderen dieser Scheiben (201) dieser im Register aufgeschichteten Platten (200) in jeder der Lagerungen (110) zusammenarbeitet;

8. Schalung gemäß Anspruch 7, dadurch gekennzeichnet, daß diese Platten (200) gleiche Dicken haben.

9. Schalung gemäß Anspruch 7, dadurch gekennzeichnet, daß diese Platten (200) zumindest zum Teil unterschiedliche Dicken haben.

10. Schalung gemäß irgendeinem der Ansprüche 7 bis 9, dadurch gekennzeichnet, daß die Seitenflächen (212) bearbeitet werden, wenn die Platten einmal aufgeschichtet und in Register gelegt sind, um ihnen das exakte Profil des Abdrucks des zu erhaltenden Gegenstandes zu geben.

11. Schalung gemäß irgendeinem der Ansprüche 7 bis 10, dadurch gekennzeichnet, daß die Karkasse (10) mit Leitungen (16) für einen Kühlkreislauf (60) ausgestattet ist, dadurch daß zumindest eine dieser Platten (200) auf zumindest einer ihrer Seiten (202) von einer Rille (204) ausgehöhlt ist, die zumindest teilweise die Kante (211) der entsprechenden Kontur einfaßt, und daß gegebenenfalls die eine oder die Platten (204), die zwischen dem Boden (112) und der Rille (204) eingeschoben sind, von Öffnungen (205) durchbohrt sind, und dadurch, daß die Leitungen (16), Öffnungen (205) und Rillen (204) ineinander einmünden, während die Platten (200) im Register aufgeschichtet und in den Lagerungen (110) blockiert sind.

12. Schalung gemäß irgendeinem der Ansprüche 7 bis 11, dadurch gekennzeichnet, daß die Karkasse (10) von Durchgängen (13) durchbohrt ist für eine Ausstoßvorrichtung (50), dadurch, daß diese Platten von Ausschnitten (206) durchbohrt sind für den Durchgang eines Teils der Ausstoßvorrichtung und daurch, daß diese Durchgänge (13) und Öffnungen (205) miteinander in Reihe liegen, während die Platten (200) im Register aufgeschichtet und in den Lagerungen (110) blockiert sind.

13. Schalung gemäß irgendeinem der Ansprüche 7 bis 9, dadurch gekennzeichnet, daß diese ergänzenden Mittel zum Legen in Register (30) einerseits von einem Trieder (31) gebildet sind, das aus zwei aufeinanderfolgenden Seitenwänden (111) und dem Boden (112) einer Lagerung (110) oder der Stirnseite einer Platte (200), die darauf ruht, gebildet ist, und andererseits von einem anderen Trieder (32), das aus den aufeinanderfolgenden Scheiben (201) der aufgeschichteten Platten (200) und den entgegengesetzten Seiten (202) der Platten (200), insbesondere derjenigen, die zum Boden (112) hin gerichtet ist, gebildet ist.

14. Schalung gemäß Anspruch 13, dadurch gekennzeichnet, daß die Platten (200) rechteckige Quader sind, dadurch, daß die Seitenwände (111), die denjenigen (111) entgegengesetzt sind, die zur Bildung des Trieders (31) beitragen, bezüglich ihnen geneigt sind und dadurch, daß die Blockierungsvorrichtung (40) von Keilen (41, 42) gebildet ist, die zwischen diesen geneigten Seitenflächen und den Scheiben, die diesen gegenüberliegen, eingesetzt sind.

15. Schalung gemäß irgendeinem der Ansprüche 11 bis 14, dadurch gekennzeichnet, daß die Verbindung zwischen Öffnung (205) und Rille (204) durch ein dichtes Ansatzstück (244) gewährleistet wird, das aus einem vorspringenden gekrümmten Ansatzstück (224) gebildet ist, das in eine Rille (204) eingelassen ist und dazu bemtimmt ist, in der Öffnung (205) eingebunden zu sein, aus einer Auskehlung (254), die die Öffnung (205) einfaßt, und aus einer Verbindungsstelle (264), die in der Auskehlung (254) gelagert ist.

## Claims

1. Procedure for fabrication of an injection moulding using a chamber with the impression of the mould to be obtained by which
- one establishes the contour lines of the part to be obtained
- one raises the co-ordinates of the contours of the lines
- one cuts into the plates (200) the thickness of which, determined proper to each one, corresponds to the interval of two successive contour lines, of cavities (210) delimited on each one of the faces (202) opposite a plate (200) by an edge (211) identical to the corresponding contour and by a side (212) joining the edges (211 of the same plate (200)
- one registers those plates (200) in such a way that the edges (211) of the two contiguous plates adjacent correspond to the same contour line and in such a way that the cavities (210) delimit together the chamber with the impression of the part
- and characterised in that one places the plates (200) so piled up on register in the housing (110) of skeleton (10) and
- one blocks the plates (200) piled on register in the housing (110) of the skeleton
- one grades on one at least of the faces, (202) of one at least of the plates, (200) a groove (204) surrounding at least partially the edge (211) of the corresponding contour for a cooling circuit.

2. Process for fabrication of a mould according to claim 1 characterised in that one uses plates of the same thickness

3. Process for fabrication of a mould according to claim 1 characterised in that one uses plates (200) of different thicknesses for each part.

4. Process for fabrication of a mould according to any one of the claims 1 to 3 characterised in that one machines the sides (212) of the plates (200) piled up on register to give them the exact profile of the impression of the piece to be obtained.

5. Process for the fabrication of a mould according to any one of the claims 1 to 4, characterised in that one puts on register the plates (200) using a tri-rectangle trihedron (31, 32) defined by the surface of the plates and housing (110) of the skeleton (10).

6. Process for the fabrication of a mould according to any one of the claims 1 to 5 characterised in that one blocks the plates (200) piled up on register in the housing (110) of the skeleton (10) by wedging.

7. Mould by injection moulding using a chamber with the impression of the part to be obtained, made in particular by any one of the preceding claims, made :
- from a frame (10) consisting of, two hollow chills which each have housing (110) delimited by lateral walls (111) and a bottom (112), a junction plane (101) opposite the bottom (112), an arrangement of mutual marking (102) of the chills (100) placed on the junction plane (101) and means of mounting (103) for placing them in a moulding machine and fitted with at least one channel (11) to introduce a substance to be moulded into the moulding chamber
- a moulding unit (20) consisting of plates (200) which show cuts (201), each of its thickness and opposite faces (:202) and which are at least, in respect of some of them, pierced by a cavity (210) which is bordered on each one of the faces (202) by an edge (211) whose contour is identical to the contour of a contour line of the piece to be obtained and by a side (212) joining the edges (211) opposite the same plate and which are cut by holes (203) for feeding in the substance to be moulded while those plates are intended to be piled up face to face in the housing (110).
characterised in that they comprise :
- supplmentary means for registering (30) carried in some cases by the walls (111) and bottoms (112) of the housing (110) and in others by the cuts (201) and faces (202) of those plates (200) in such a way that the edges (211) of those contiguous adjacent plates corresponding to the same contour line coincide so that the whole of the cavities (210) form the chamber with the impression of the part to be obtained in such a way that the holes (203) are aligned with one another and with the channel (11);
and a blocking device (40) working together on the one hand with some other walls (111) of the housing (110) and on the other hand with some other of those cuts (201) of the plates (200) piled up on register in each one of the housings (110).

8. Mould according to claim 7, characterised in that those plates (200) have equal thicknesses.

9. Mould according to claim 7, characterised in that those plates (200) have, in part at least, different thicknesses.

10. Mould according to any one of the claims 7 to 10 characterised in that the sides (212) are machined once the plates (200) are piled up and registered to give them the exact impression of the part to be obtained.

11. Mould according to any one of the claims 7 to 10, characterised in that the skeleton (10) is provided with conduits (16) for a cooling circuit (60) in that at least one of those plates (200) is hollowed on one at least of its faces (202) with a groove surrounding, at least partially, the edge of the corresponding contour -and if necessary the intercalary plate between the bottom (112) and groove (204) emerge into one another and the plates (200) are piled up on register and blocked in the housing (110).

12. Mould according to any one of the claims 7 to 11 characterised in that the skeleton (10) is pierced by passages (13) for an ejector (50) in that the plates are pierced by cuts (206) for the crossing of a part of the ejector and in that those passages (13) and orifices (205) are aligned with one another when the plates (200) are piled up on register and blocked in the housing (110).

13. Mould according to any one of the claims 7 to 9 characterised in that the supplementary means of registering (30) consists of, on the one hand, a trihedron made of consecutive lateral walls (111) and the bottom of housing (110) or of the apparent face (202) of a plate (200) which rests there and on the other hand of a trihedron (32) made of consecutive cuts (201) of the plates (200) piled up and of the opposite faces (202) of the plates in particular by which it is directed towards the bottom (112).

14. Mould according to claim 13, characterised in that the plates (200) are parallelepiped rectangles in which the lateral walls (111) which are opposite to those (111) which share in forming of the trihedron (31) are inclined in relationship to them and in that the blocking device (40) consists of corners (41, 42) inserted between those lateral inclined faces and the cuts situated in regard to those.

15. Mould according to any one of the claims 11 to 14 characterised in that the connection between orifice (205) and groove (204) is ensured by a sealed coupling (244) consisting of a projecting sealed tip (224) into the groove (204) and meant to be engaged in the orifice (205), a groove (254) and a joint (264) lodged in the groove.
